# EUROPÄISCHE PATENTSCHRIFT

(11) **EP 0 993 485 B1**
(45) Veröffentlichungstag und Bekanntmachung des Hinweises auf die Patenterteilung: **06.11.2002**
(21) Anmeldenummer: 98939593.4
(22) Anmeldetag: 01.07.1998
(51) Int. Cl.: C08J 3/12, C09D 5/02

(54) **WÄSSRIGE PULVERLACK-DISPERSION, VERFAHREN ZU IHRER HERSTELLUNG SOWIE VERWENDUNG DER ERHALTENEN PULVERLACK-DISPERSION**
AQUEOUS COATING POWDER DISPERSION, METHOD FOR THE PRODUCTION AND USE OF SAID DISPERSION
DISPERSION AQUEUSE DE PEINTURE PULVERULENTE, PROCEDE PERMETTANT DE LA PRODUIRE ET UTILISATION DE LA DISPERSION DE PEINTURE PULVERULENTE AINSI OBTENUE

(30) Priorität: 01.07.1997 DE 19727892
(43) Veröffentlichungstag der Anmeldung: 19.04.2000
(73) Patentinhaber: BASF Coatings AG, 48165 Münster (DE)
(72) Erfinder: SAPPER, Ekkehard, D-97222 Rimpar (DE); WOLTERING, Joachim, D-48159 Münster (DE)
(74) Vertreter: Fitzner, Uwe, Dr.
(86) Internationale Anmeldenummer: EP9804056
(87) Internationale Veröffentlichungsnummer: WO99001499

(56) Entgegenhaltungen:
- EP-A- 0 226 527
- WO-A-97/15616
- DE-A- 19 526 759
- DATABASE WPI Week 8322 Derwent Publications Ltd., London, GB; AN 52630k XP002085524 "water based coating composition " A & JP 58 067765 A (NIPPON PAINT) 22. April 1983

## Beschreibung

Die vorliegende Erfindung betrifft eine wäßrige Pulverlack-Dispersion, die sich insbesondere zur Herstellung von Pigmentpasten, Unidecklacken und Klarlacken eignet.

Gegenstand der vorliegenden Erfindung ist ferner ein Verfahren zur Herstellung der wäßrigen Pulverlack-Dispersion und die Verwendung der Pulverlack-Dispersion, insbesondere für die Beschichtung von Automobilkarosserien.

Für die Beschichtung von Automobilkarosserien werden heute vorzugsweise Flüssiglacke verwendet. Diese verursachen zahlreiche Umweltprobleme aufgrund ihres Lösemittelgehaltes. Dies gilt auch für die Fälle des Einsatzes von Wasserlacken.

Aus diesem Grund sind in den letzten Jahren vermehrte Anstrengungen unternommen worden, für die Beschichtung Pulverlacke zu verwenden. Die Ergebnisse sind jedoch bisher nicht zufriedenstellend, insbesondere sind zur Erzielung eines gleichmäßigen Aussehens erhöhte Schichtdicken erforderlich. Auf der anderen Seite bedingt der Einsatz von pulverförmigen Lacken eine andere Applikationstechnologie. Die für Flüssiglacke ausgelegten Anlagen können daher hierfür nicht verwendet werden. Daher ist man bestrebt, Pulverlacke in Form wäßriger Dispersionen zu entwickeln, die sich mit Flüssiglacktechnologien verarbeiten lassen.

Aus der US-Patentschrift 4,268,542 ist beispielsweise ein Verfahren bekannt, bei dem eine Pulverlack-Slurry verwendet wird, die sich für die Beschichtung von Automobilen eignet. Hierbei wird zunächst eine herkömmliche Pulverschicht auf die Karosserie aufgetragen und als zweite Schicht wird die Klarlack-Slurry aufgebracht. Bei dieser Klarlack-Slurry werden Bindemittel auf Basis von Acrylatharzen und ionische Verdicker verwendet. Bei diesen Klarlack-Slurries muß mit hohen Einbrenntemperaturen (über 160° C) gearbeitet werden.

Im folgenden wird der Begriff Pulverklarlack-Dispersion als Synonym für Pulverklarlack-Slurry verwendet.

Aus der DE-A-196 18 657 ist eine wäßrige Pulverlack-Dispersion bekannt, die herstellbar ist, indem zunächst aus einem Bindemittel und Vernetzer sowie ggf. weiteren Hilfs- und Zusatzstoffen mittels Extrusion und Vermahlen des Extrudats ein Pulverlack hergestellt wird, der Pulverlack in Wasser dispergiert wird und anschließend die wäßrige Dispersion des Pulverlacks bei einer Schergeschwindigkeit von 500 s ⁻¹ einem Mahlprozeß unter Einhaltung einer Temperatur von 0 bis 60 °C unterworfen wird.

Ferner ist aus der WO 94/09913 ein Verfahren zur Herstellung von Pulverlacken bekannt, bei dem das Bindemittel und der Vernetzer unter Verwendung von superkritischem Gas, insbesondere superkritischem Kohlendioxid, gelöst und die Pulverlackpartikel durch anschließendes Versprühen erzeugt werden. Die Herstellung von wäßrigen Pulverlack-Dispersionen ist in der WO 94/09913 nicht beschrieben.

Die Sprühtrocknung von (re-)dispergierbaren Dispergierpulvern ist z.B. aus der EP 0 226 527, der DE 195 26 759, der JP 58067765 oder der WO 97/15616 bekannt. Eine Sprühtrocknung von Vemetzer enthaltenden Pulverlacken, welche den Anforderungen an Automobilbeschichtungen genügen, ist aus diesen Schriften jedoch nicht zu entnehmen.

Die vorliegende Erfindung hat sich nunmehr die Aufgabe gestellt, eine wäßrige Pulverlack-Dispersion zur Verfügung zu stellen, die sich mit der bisherigen Flüssiglacktechnologie auf Automobilkarosserien auftragen läßt und insbesondere bereits bei Temperaturen von 130°C einbrennbar ist. Ferner sollte die Pulverlack-Dispersion möglichst einfach und kostengünstig herstellbar sein, möglichst feinteilig sein, einen guten Verlauf zeigen und zu Beschichtungen mit guten technologischen Eigenschaften, beispielsweise mit gutem Appearance und gutem Glanz, führen. Außerdem sollten auch Pulverlacke mit bei Umgebungstemperatur reaktiven Komponenten, wie beispielsweise Pulverlacke auf Basis freier Isocyanate, für diese Pulver-Slurries einsetzbar sein, ohne daß Koagulate u.ä. auftreten.

Diese Aufgabe wird überraschenderweise durch eine wäßrige Pulverlack-Dispersion gelöst, die dadurch gekennzeichnet ist, daß sie herstellbar ist, indem der Vernetzer des Pulverlacks oder das Bindemittel des Pulverlacks und der Vernetzer des Pulverlacks oder der gesamte Pulverlack durch Sprühtrocknung zu einem Pulver verarbeitet wird und anschließend eine wäßrige Pulverlack-Dispersion unter Verwendung des sprühgetrockneten Pulvers hergestellt wird.

Gegenstand der vorliegenden Erfindung ist ferner ein Verfahren zur Herstellung der wäßrigen Pulverlack-Dispersion sowie deren Verwendung, insbesondere zur Beschichtung von Automobilkarosserien sowie deren Verwendung in Verfahren zur Herstellung einer Mehrschichtlackierung.

Es ist überraschend und war nicht vorhersehbar, daß die erfindungsgemäße Pulverlack-Dispersion im Vergleich zu herkömmlichen Pulverlack-Dispersionen wesentlich einfacher und kostengünstiger herstellbar ist und trotzdem einen guten Verlauf zeigt und zu Beschichtungen mit den gewünschten guten technologischen Eigenschaften, beispielsweise mit gutem Appearance und gutem Glanz, führt. Vorteilhaft ist ferner, daß sich die erfindungsgemäße Pulverlack-Dispersion mit der bisherigen Flüssiglacktechnologie auf Automobilkarosserien auftragen läßt und insbesondere bereits bei Temperaturen von 130°C einbrennbar ist. Schließlich sind die erfindungsgemäßen Pulverlack-Dispersionen sehr feinteilig.

Es ist erfindungswesentlich, daß die Pulverlack-Dispersion unter Verwendung eines sprühgetrockneten Pulvers hergestellt wird. Bevorzugt wird dabei zur Herstellung der erfindungsgemäßen Pulverlack-Dispersion der gesamte Pulverlack der Sprühtrocknung unterworfen. Eine weitere Ausführungsform der Erfindung besteht darin, nur das Hauptbindemittel des Pulverlacks mittels Sprühtrocknung zu einem Pulver zu verarbeiten und den Vernetzer sowie ggf. Katalysatoren, Hilfsstoffe und Additive der erfindungsgemäßen Pulverlack-Dispersion durch nachträgliches Zumischen einzuarbeiten. Schließlich ist auch möglich, nur den Vernetzer der Sprühtrocknung zu unterwerfen und das Bindemittel sowie ggf. Katalysatoren, Additive und Hilfsstoffe durch nachträgliches Zumischen in die erfindungsgemäße Pulverlack-Dispersion einzuarbeiten.

Die erfindungswesentliche Sprühtrocknung kann mit Hilfe üblicher Verfahren durchgeführt werden. Beispielsweise kann mit Hilfe eines Rotationszerstäubers, eines Druckzerstäubers oder mittels pneumatischer Zerstäubung gearbeitet werden. Bevorzugt wird aber unter Verwendung eines Rotationszerstäubers gearbeitet.

Für die Sprühtrocknung kommt zum Trocknen insbesondere ein erwärmtes Gas, insbesondere ein erwärmtes inertes Gas, bevorzugt erwärmte Luft oder erwärmter Stickstoff zum Einsatz. Das Gas wurde bevorzugt auf eine solche Temperatur erwärmt, daß bei der jeweiligen Ausflußgeschwindigkeit durch die Düse die Temperatur am Sprühkorn so hoch ist, daß einerseits eine gute Verdampfung des Wassers bzw. Lösemittels gewährleistet ist und andererseits die Temperatur am Sprühkorn maximal so hoch ist, daß keine Verklebungen/Vernetzungen o.ä. auftreten. Bevorzugt erfolgt die Sprühtrocknung bei einer Produkttemperatur unterhalb der Glasübergangstemperatur des Bindemittels des Pulverlacks. Besonders bevorzugt sollte die Temperatur am Sprühkorn maximal 80 °C, ganz besonders bevorzugt 40 bis 60 °C, betragen. Besonders bevorzugt kommt Gas, das auf eine Temperatur von 100 bis 200 °C erwärmt wurde, zum Einsatz. Die zur Verdampfung des Wassers bzw. Lösemittels erforderliche Wärmemenge kann aber selbstverständlich auch teilweise oder vollständig durch andere Methoden, beispielsweise Strahlungsheizung, zugeführt werden.

Die für die Sprühtrocknung eingesetzte, zu versprühende Lösung bzw. Dispersion weist bevorzugt einen Festkörpergehalt von 30 bis 60 Gew.-% auf.

Das Versprühen der Teilchen kann insbesonders mittels eines Rotationszerstäubers, mittels eines Druckzerstäubers oder mittels eines pneumatischen Zerstäubers, bevorzugt mittels eines Rotationszerstäubers, erfolgen. Die Verwendung eines Rotationszerstäubers weist dabei den Vorteil auf, daß sehr feinteilige Pulver mit einer engen Korngrößenverteilung erhalten werden. Außerdem sind insbesondere im Falle der Spühtrocknung unter Verwendung eines Rotationszerstäubers die erhaltenen größeren Pulverteilchen hauptsächlich Aggregate kleinerer Teilchen, so daß die anschließende Herstellung der Pulver-Slurry leicht und mit geringerem Energieeintrag möglich ist.

Ggf. kann an die Sprühtrocknung noch ein Sichtvorgang (insbesondere mittels Windsichter) angeschlossen werden.

Im Falle der Verwendung eines Rotationszerstäubers beträgt der Flüssigkeitsdruck i.a. 2 bis 3 bar. Im Falle der Verwendung eines pneumatischen Zerstäubers oder eines Druckzerstäubers beträgt der Flüssigkeitsdruck bevorzugt 20 bis 50 bar.

Die Sprühtrocknung kann mit Hilfe üblicher Sprühtrockner, die im Handel beispielsweise von der Firma NIRO, Dänemark und der Firma Anhydro, Dänemark erhältlich sind, erfolgen.

Im Falle der Rotationszerstäuber liegt der Durchmesser der Anlage bevorzugt zwischen 2,5 und 3,5 m und die Länge beträgt bevorzugt 4,5 bis 5,5 m. Die Temperatur des zum Trocknen eingesetzten Gases liegt innerhalb der obengenannten Grenzen, bevorzugt bei 100 bis 200 °C. Die Menge an Trocknungsgas, bevorzugt Trocknungsluft, liegt bevorzugt bei 5.000 bis 5.500 Normkubikmetern pro Stunde.

Im Falle der Druckzerstäubung und der pneumatischen Zerstäubung wird ebenfalls mit üblichen Anlagen unter Verwendung von inerten Gasen oder Luft gearbeitet. Im Falle der pneumatischen Zerstäubung beträgt die verwendete Menge an Zerstäubungsluft bzw. Gas pro Tonne zu zerstäubendem Material i.a. etwa 1 Tonne und es wird vorzugsweise unter Einsatz feiner Düsen gearbeitet.

Die Durchflußgeschwindigkeit durch die Düse wird bei der Sprühtrocknung bevorzugt so eingestellt, daß auf einer Anlage der Firma Niro Atomizer pro Minute 50 ml bis 800 ml versprüht werden.

Die mittels der Sprühtrocknung hergestellten Pulver, die anschließend zu der erfindungsgemäßen Pulverlack-Dispersion weiterverarbeitet werden, weisen im allgemeinen eine mittlere Teilchengröße zwischen 5 und 50 µm auf. Werden die Pulver unter Verwendung eines Rotationszerstäubers sprühgetrocknet, so liegt die mittlere Teilchengröße i.a. unter 15 µm. Bei Verwendung eines pneumatischen Zerstäubers liegt die mittlere Teilchengröße i.a. unter 50 µm und bei Verwendung eines Druckzerstäubers i.a. bei 20 bis 80 µm.

Falls eine enge Korngrößenverteilung der Pulver gewünscht ist, kann an die Sprühtrocknung noch ein Sichten angeschlossen werden, insbesondere mittels eines Windsichters. Hierdurch kann die mittlere Teilchengröße auf 5 bis 25 µm, bevorzugt 8 bis 20 µm, eingestellt werden.

Erfindungsgemäß kommt bevorzugt eine wäßrige Pulverlack-Dispersion zum Einsatz, die aus einer festen, pulverförmigen Komponente A und einer wäßrigen Komponente B besteht, wobei

Komponente A ein Pulverlack ist, enthaltend
Aa) wenigstens ein Bindemittel,
Ab) wenigstens ein Vernetzungsmittel,
Ac) ggf. ein oder mehrere weitere, von (Aa) verschiedene Bindemittel und
Ad) ggf. ein oder mehrere Pigmente und/oder Füllstoffe
Ae) ggf. Katalysatoren, Hilfsstoffe und pulverlacktypische Additive
und

Komponente B eine wäßrige Dispersion ist, enthaltend
Ba) wenigstens einen nicht-ionischen Verdicker und
Bb) ggf. Katalysatoren und Hilfsstoffe und
Bc) ggf. ein oder mehrere weitere, von (Aa) verschiedene Bindemittel.

Wie bereits oben ausgeführt, ist es erfindungswesentlich, daß die Pulverlack-Dispersion unter Verwendung des sprühgetrockneten Bindemittels (Aa) und/oder des sprühgetrockneten Vernetzers (Ab) oder des sprühgetrockneten Pulverlacks bzw. der sprühgetrockneten Komponente (A) hergestellt wird.

Eine bevorzugte Ausführungsform besteht daher darin, zunächst eine wäßrige Dispersion des Bindemittels (Aa) herzustellen, die dann in dem Fachmann bekannter Weise mit der Vernetzerkomponente (Ab), ggf. weiterem Bindemittel (Ac), ggf. Pigmenten und/oder Füllstoffen (Ad) und ggf. Katalysatoren, Hilfsstoffen und Additiven (Ae) versetzt wird und aus der dann anschließend mittels Sprühtrocknung der Pulverlack bzw. die Komponente (A) hergestellt wird.

Für die Herstellung der wäßrigen Dispersion des Bindemittels enthalten die Bindemittel in diesem Fall mindestens eine Gruppe, die die Wasserdispergierbarkeit gewährleistet. Geeignete Gruppen dieser Art sind nichtionische Gruppen (z. B. Polyether), anionische Gruppen, Gemische dieser beiden Gruppen oder kationische Gruppen.

So kann bevorzugt eine so große Säurezahl in das Bindemittel eingebaut werden, daß das neutralisierte Produkt stabil in Wasser zu dispergieren ist. Hierzu dienen Verbindungen, die mindestens eine reaktive Gruppe (z.B. bei Acrylatharzen ethylenisch ungesättigte Doppelbindung, bei Polyestern OH- oder COOH-Gruppe u.ä.) und mindestens eine zur Anionenbildung befähigte Gruppe enthalten. Gruppen, die zur Anionenbildung befähigt sind, sind z.B. Carboxyl-, Sulfonsäure- und/oder Phosphonsäuregruppen. Die durch die Säuregruppenneutralisation in Salzform verfügbare Menge an ionisierbaren Säuregruppen beträgt im allgemeinen wenigstens 0,4 Gew.-%, vorzugsweise wenigstens 0,7 Gew.-%, bezogen auf den Feststoff. Die obere Grenze beträgt etwa 12 Gew.-%. Bei sehr niedrigen Säurezahlen sind i.a. weitere Maßnahmen zur Erzielung der Wasserdispergierbarkeit erforderlich.

Die Einarbeitung des Vernetzers und der ggf. zuzufügenden anderen Bestandteile erfolgt durch Mischen und/oder Dispergieren mittels üblicher Aggregate, z.B. mittels eines Dissolvers o.ä.

Die Sprühtrocknung erfolgt wie oben bereits beschrieben. Hierbei ist es besonders vorteilhaft, daß durch die hohe Verdunstungswärme des verdunstenden Wassers ein Kühleffekt erfolgt, so daß auch bei Verwendung von heißer Luft bzw. heißem Gas mit einer Temperatur von bevorzugt 100 bis 200 °C die auf die Pulverlackteilchen einwirkende Temperatur deutlich niedriger ist und z.B. nur bei ca. 40 - 80 °C liegt. Dies ermöglicht auch die problemlose Herstellung von Pulverlacken mit reaktiven Bindemitteln/Vernetzern, die bei der herkömmlichen Herstellung von Pulverlacken und Pulverlack-Dispersionen mittels Extrusion aufgrund der thermischen Belastung beim Extrudieren nicht oder nur schwierug herstellbar sind. Dies gilt insbesondere für Vernetzer auf der Basis freier Isocyanate, aber auch für reaktive Amino-plastharze o.ä.

Die Verwendung einer wäßrigen Dispersion für die Sprühtrocknung hat ferner den Vorteil, daß die Sprühtrocknung in einem Sprühzerstäuber ohne Expiosionsschutz erfolgen kann.

Eine weitere Ausführungsform zur Herstellung der erfindungsgemäßen Pulverlack-Dispersion besteht darin, zunächst eine Lösung des Bindemittels in einem oder mehreren organischen Lösemitteln oder eine Schmelze des Bindemittels herzustellen, die dann in dem Fachmann bekannter Weise mit der Vernetzerkomponente und ggf. Katalysatoren, Hilfsstoffen und Additiven versetzt wird und aus der dann anschließend mittels der obenbeschriebenen Sprühtrocknung, besonders bevorzugt unter Verwendung von Rotationszerstäubern, der Pulverlack bzw. die Komponente (A) hergestellt wird.

Ferner ist es auch möglich, zunächst eine Lösung des Bindemittels oder des Pulverlackes in unter Druck verflüssigten Gasen oder überkritischen Gasen, wie z.B. flüssigem Stickstoff, flüssigem Kohlendioxid o.ä., herzustellen und diese Lösung der Sprühtrocknung zu unterwerfen.

Wie bereits oben beschrieben, kann aber auch nur das Hauptbindemittel des Pulverlacks mittels Sprühtrocknung zu einem Pulver verarbeitet werden und der Vernetzer sowie ggf. Katalysatoren, Hilfsstoffe und Additive werden in der erfindungsgemäßen Pulverlack-Dispersion durch nachträgliches Zumischen eingearbeitet. Schließlich ist es auch möglich, nur den Vernetzer der Sprühtrocknung zu unterwerfen und das Bindemittel sowie ggf. Katalysatoren, Hilfsstoffe und Additive durch nachträgliches Zumischen in die erfindungsgemäßen Pulverlack-Dispersion einzuarbeiten.

Die Herstellung der erfindungsgemäßen Pulverlack-Dispersion unter Verwendung des Pulverlacks bzw. der Komponente (A) erfolgt mittels bekannter Methoden, beispielsweise durch Naßvermahlung. Hierzu wird die Komponente (A) in der Komponente (B) dispergiert bzw. es wird der Pulverlack in Wasser dispergiert und anschließend wird mit Hilfe üblicher Vorrichtungen, wie z.B. Rührwerksmühlen, die wäßrige Pulverlack-Dispersion hergestellt. Vorzugsweise beträgt der spezifische Energieeintrag während des Mahlprozesses 20 bis 500 Wh/kg.

Während des Mahlprozesses enthält die Dispersion bevorzugt nur geringe Mengen Lösemittel. Es ist daher u.U. erforderlich, die Mahlvorrichtung vor Beginn des Mahlprozesses von Lösemittelresten zu befreien.

Die mittlere Korngröße der erhaltenen Pulverlack-Dispersion liegt zwischen 1 und 25 µm, vorzugsweise unter 20 µm, besonders bevorzugt bei 3 bis 8 µm.

Eine andere Methode zur Herstellung der erfindungsgemäßen Pulverlack-Dispersionen besteht darin, die mittels Sprühtrocknung erhaltene Komponente A mittels geeigneter Vorrichtungen, z.B. durch Sichten, zu einem sehr feinen Pulver, bevorzugt mit einer mittleren Teilchengröße von weniger als 15 µm, besonders bevorzugt mit einer mittleren Teilchengröße von 5 bis 10 µm, zu verarbeiten. Dieses Feinpulver braucht nicht mehr mit Rührwerksmühlen erneut gemahlen werden, sondern die Pulverlack-Dispersion kann durch Mischen der Komponente (A) mit der Komponente (B), beispielsweise mittels eines Dissolvers o.ä., zu der erfindungsgemäßen Pulverlack-Dispersion verarbeitet werden.

Im folgenden werden nun die einzelnen Bestandteile der bevorzugt eingesetzten erfindungsgemäßen Pulverlack-Dispersion näher erläutert.

Bevorzugt werden zur Herstellung der erfindungsgemäßen Pulverlack-Dispersion Bindemittel (Aa) eingesetzt, die bezogen auf die vernetzenden Gruppen ein Äquivalentgewicht (also beispielsweise ein Epoxidäquivalentgewicht oder ein Hydroxyläquivalentgewicht usw.) von 400 bis 2500, vorzugsweise 420 bis 700, ein zahlenmittleres Molekulargewicht (gelpermeationschromatographisch unter Verwendung eines Polystyrolstandards bestimmt) von 2.000 bis 20.000, vorzugsweise von 3.000 bis 10.000, und eine Glasübergangstemperatur (T_{G}) von 20 bis 100 °C, vorzugsweise von 40 bis 70 °C, besonders bevorzugt von 40 bis 60°C (gemessen mit Hilfe der differential scanning calometrie (DSC) aufweisen. Ganz besonders bevorzugt werden ca. 50°C. Zum Einsatz können auch Gemische aus zwei oder mehr Bindemitteln (Aa) kommen.

Erfindungsgemäß wird als Bindemittel (Aa) bevorzugt ein Acrylatcopolymerisat eingesetzt, das besonders bevorzugt vinylaromatische Verbindungen, insbesondere Styrol, einpolymerisiert enthält. Um die Gefahr der Rißbildung zu begrenzen, liegt der Gehalt jedoch nicht über 35 Gew.-%. Bevorzugt werden 10 bis 25 Gew.-%.

Insbesondere werden zur Herstellung der erfindungsgemäßen Pulverlack-Dispersionen als Komponente (Aa) epoxidgruppenhaltige Bindemittel (Aa1 oder carboxylgruppenhaltige Bindemittel (aa2) oder hydroxylgruppenhaltige Bindemittel (Aa3) und als Vernetzer-Komponente (Ab) entsprechend carboxylgruppenhaltige Vernetzer (Ab1) oder epoxidgruppenhaltige Vernetzer (Ab2) oder gegenüber Hydroxylgruppen reaktive Vernetzer (Ab3) eingesetzt. Zur Herstellung der erfindungsgemäßen Pulverlack-Dispersionen können die Vernetzer auch in Form wäßriger Suspensionen, wäßriger Emulsionen und wäßriger Slurries eingesetzt werden.

Als epoxifunktionelles Bindemittel (Aa1) für den festen Pulverlack, der zur Herstellung der Dispersion verwendet wird, sind beispielsweise epoxidgruppenhaltige Polyacrylatharze geeignet, die durch Copolymerisation von mindestens einem ethylenisch ungesättigten Monomer, das mindestens eine Epoxidgruppe im Molekül enthält, mit mindestens einem weiteren ethylenisch ungesättigten Monomer, das keine Epoxidgruppe im Molekül enthält, herstellbar sind, wobei mindestens eines der Monomere ein Ester der Acrylsäure oder Methacrylsäure ist. Derartige epoxidgruppenhaltige Polyacrylatharze sind z.B. bekannt aus EP-A-299 420, DE-B-22 14 650, DE-B-27 49 576, US-A-4,091,048 und US-A-3,781,379).

Als Beispiele für ethylenisch ungesättigte Monomere, die keine Epoxidgruppe im Molekül enthalten, werden Alkylester der Acryl- und Methacrylsäure, die 1 bis 20 Kohlenstoffatome im Alkylrest enthalten, insbesondere Methylacrylat, Methylmethacrylat, Ethylacrylat, Ethylmethacrylat, Butylacrylat, Butylmethacrylat, 2-Ethylhexylacrylat und 2-Ethylhexylmethacrylat genannt. Weitere Beispiele für ethylenisch ungesättigte Monomere, die keine Epoxidgruppen im Molekül enthalten, sind Säureamide, wie z.B. Acrylsäure- und Methacrylsäureamid, vinylaromatische Verbindungen, wie Styrol, Methylstyrol und Vinyltoluol, Nitrile, wie Acrylnitril und Methacrylnitril, Vinyl- und Vinylidenhalogenide, wie Vinylchlorid und Vinylidenfluorid, Vinylester, wie z.B. Vinylacetat und hydroxylgruppenhaltige Monomere, wie z.B. Hydroxyethylacrylat und Hydroxyethylmethacrylat.

Das epoxidgruppenhaltige Polyacrylatharz kann nach allgemein gut bekannten Methoden durch Polymerisation hergestellt werden.

Als Vernetzer (Ab1) sind Carbonsäuren, insbesondere gesättigte, geradkettige, aliphatische Dicarbonsäuren mit 3 bis 20 C-Atomen im Molekül geeignet. Ganz besonders bevorzugt werden aliphatische Dicarbonsäuren mit 12 C-Atomen, wie z.B. Dodecan-1,12-dicarbonsäure, eingesetzt. Zur Modifizierung der Eigenschaften der fertigen Pulverlacke können ggf. noch andere Carboxylgruppen enthaltende Vernetzer eingesetzt werden. Als Beispiele hierfür seien gesättigte verzweigte oder ungesättigte geradkettige Di- und Polycarbonsäuren sowie Polymere mit Carboxylgruppen genannt.

Ferner sind auch Pulverlacke geeignet, die einen epoxifunktionellen Vernetzer (Ab2) und ein säurefunktionelles Bindemittel (Aa2) enthalten.

Als säurefunktionelles Bindemittel sind beispielsweise saure Polyacrylatharze geeignet, die durch Copolymerisation von mindestens einem ethylenisch ungesättigten Monomer, das mindestens eine Säuregruppe im Molekül enthält, mit mindestens einem weiteren ethylenisch ungesättigten Monomer, das keine Säuregruppe im Molekül enthält, herstellbar sind.

Das epoxidgruppenhaltige Bindemittel bzw. der epoxidgruppenhaltige Vernetzer und der carboxylgruppenhaltige Vernetzer bzw. das carboxylgruppenhaltige Bindemittel werden üblicherweise in einer solchen Menge eingesetzt, daß pro Äquivalent Epoxidgruppen 0,5 bis 1,5, vorzugsweise 0,75 bis 1,25 Äquivalente Carboxylgruppen vorliegen. Die Menge an vorliegenden Carboxylgruppen kann durch Titration mit einer alkoholischen KOH-Lösung ermittelt werden.

Ferner sind auch Pulverlacke geeignet, die ein hydroxyfunktionelles Bindemittel (Aa3) und einen gegenüber OH-Gruppen reaktiven Vernetzer (Ab3) enthalten.

Als hydroxyfunktionelles Bindemittel sind beispielsweise hydroxylgruppenhaltige Polyacrylatharze geeignet, die durch Copolymerisation von mindestens einem ethylenisch ungesättigten Monomer, das mindestens eine Hydroxylgruppe im Molekül enthält, mit mindestens einem weiteren ethylenisch ungesättigten Monomer, das keine Hydroxylgruppe im Molekül enthält, herstellbar sind.

Als hydroxylgruppenhaltiges Bindemittel für den Pulverlack sind ferner hydroxylgruppenhaltige Polyesterharze geeignet, die in üblicher Weise aus aromatischen oder aliphatischen oder cycloaliphatischen Di- und/oder Polyolen, ggf. in Kombination mit Monoolen, und aromatischen oder aliphatischen oder cycloaliphatischen Di- und/oder Polycarbonsäuren, ggf. in Kombination mit Monocarbonsäuren, hergestellt worden sind. Aufgrund der besseren Kreidungs- und Witterungsbeständigkeit werden vorzugsweise aliphatische und/oder cycloaliphatische Aufbaukomponenten für die Herstellung der Polyesterharze eingesetzt.

Beispielsweise können die Polyesterharze hergestellt worden sein unter Verwendung von Ethylenglykol, Propandiol, Butandiol, Neopentylglykol, Hexandiol, Cyclohexandiol, 4,4'-Dihydroxydicyclohexylpropan-2,2, Trimethylolpropan, Hexantriol, Pentaerythrit. Als weitere Diole sind auch Ester von Hydroxycarbonsäuren mit Diolen geeignet, wobei als Diol die voranstehend genannten Diole eingesetzt werden können. Beispiele für Hydroxycarbonsäuren sind Hydroxypivalinsäure oder Dimetthylolpropansäure. Als Säuren können z.B. Adipinsäure, Glutarsäure, Acelainsäure, Sebacinsäure, Fumarsäure, Maleinsäure, Tetrahydrophthalsäure, Hexahydrophthalsäure, Cyclohexandicarbonsäure, Phthalsäure, Terephthalsäure, Isophthalsäure und Trimellithsäure eingesetzt werden. Geeignet sind auch die veresterungsfähigen Derivate der obengenannten Polycarbonsäuren, wie z.B. deren ein- oder mehrwertige Ester mit aliphatischen Alkoholen mit 1 bis 4-C-Atomen oder Hydroxyalkoholen mit 1 bis 4 C-Atomen. Außerdem können auch die Anhydride der obengenannten Säuren eingesetzt werden, sofern sie existieren.

Selbstverständlich können auch beliebige Mischungen der genannten Bindemittel eingesetzt werden.

Als Vernetzer (Ab3) für die hydroxylgruppenhaltigen Bindemittel können beispielsweise isocyanatgruppenhaltige Verbindungen eingesetzt werden. Geeignet sind insbesondere die bei Raumtemperatur festen Isocyanate, bevorzugt kristalline Isocyanate. Sie können erhalten werden durch Addition von Diisocyanaten an Di-, Trioder Polyole oder Di-, Tri- oder Polyamine, oder aus Diisocyanaten durch Dimerisierung zu Uretdionen, Trimerisierung zu Isocyanuraten und mit Aminen oder Wasser zu Biureten. Auch Allophanat-, Carbodiimid- und Estergruppen enthaltende Di- und Polyisocyanate sind als Vernetzungsmittel für die erfindungsgemäßen Pulverlacke geeignet. Aufgrund ihrer guten Beständigkeit gegenüber ultraviolettem Licht ergeben (cyclo)aliphatische Diisocyanate Produkte mit geringer Vergilbungsneigung.

Ferner können für die Herstellung der erfindungsgemäßen Pulverlack-Dispersionen auch wäßrige Dispersionen, wäßrige Emulsionen oder wäßrige Slurries von Isocyanaten oder anderen Vernetzern eingesetzt werden. So sind beispielsweise auch wäßrige Slurries (wäßrige Zubereitungen) von Isocyanaten auf Basis von Hexamethylendiisocyanat, blockiert mit Butanonoxim oder ähnliche Slurries von blockierten Isocyanaten geeignet.

Für die Herstellung der erfindungsgemäß eingesetzten Di- und Polyisocyanate sind z.B. folgende Isocyanate geeignet: Phenylendiisocyanat, Toluylendiisocyanat, Xylylendiisocyanat, Bisphenylendiisocyanat, Naphthylendiisocyanat, Diphenylmethandiisocyanat, Isophorondiisocyanat, Cyclobutandiisocyanat, Cyclopentylendiisocyanat, Cyclohexylendiisocyanat, Methylcyclohexylendiisocyanat, Dicyclohexylmethandiisocyanat, Ethylendiisocyanat, Trimethylendiisocyanat, Tetramethylendiisocyanat, Pentamethylendiisocyanat, Hexamethylendiisocyanat, Propylendiisocyanat, Ethylethylendiisocyanat und Trimethylhexandiisocyanat. Ferner sind auch Diisocyanate der allgemeinen Formel (III') 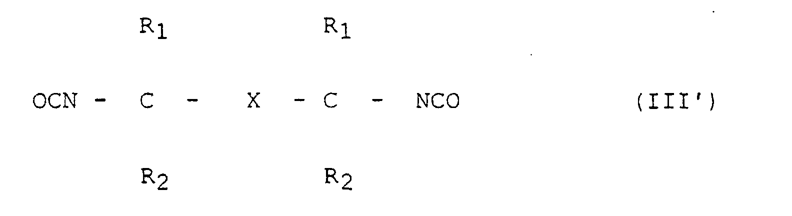 geeignet, wobei X für einen zweiwertigen, aromatischen Kohlenwasserstoffrest, vorzugsweise für einen ggf. Halogen-, Methyl- oder Methoxy-substituierten Naphthylen-, Diphenylen- oder 1,2-, 1,3- oder 1/4-Phenylenrest, besonders bevorzugt für einen 1,3-Phenylenrest und R₁ und R₂ für einen Alkylrest mit 1 - 4 C-Atomen, bevorzugt für einen Methylrest, stehen. Diisocyanate der Formel (III') sind bekannt (ihre Herstellung wird beispielsweise in der EP-A-101 832, US-PS-3,290,350, US-PS-4,130,577 und der US-PS-4,439,616 beschrieben) und zum Teil im Handel erhältlich (1,3-Bis-(2-isocyanatoprop-2-yl)-benzol wird beispielsweise von der American Cyanamid Company unter dem Handelsnamen TMXDI (META)® verkauft).

Weiterhin sind Diisocyanate der Formel (IV') geeignet (IV'), 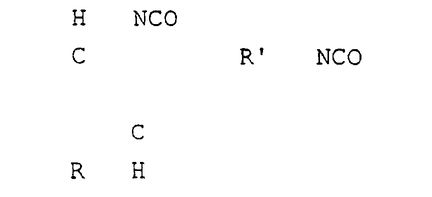 wobei R für einen zweiwertigen Alkyl- oder Aralkylrest mit 3 bis 20 Kohlenstoffatomen und R' für einen zweiwertigen Alkyl- oder Aralkylrest mit 1 bis 20 Kohlenstoffatomen steht.

Die isocyanatgruppenhaltigen Vernetzer können in den erfindungsgemäßen Pulverlack-Dispersionen sowohl in nicht blockierter Form als auch in blockierter Form eingesetzt werden.

Als Blockierungsmittel für die Isocyanate eignen sich die üblicherweise eingesetzten Verbindungen, beispielsweise hydroxyl- und aminogruppenhaltige Verbindungen, wie aliphatische, cycloaliphatische und aromatische Alkylmonoalkohole, z.B. Methyl, Ethyl-, Chlorethyl-, Propyl-, Butyl-, Cyclohexyl-, Heptyl-, Octyl-, Nonyl-Alkohole, 3,3,5-Trimethylhexanol, Decyl- und Laurylalkohole; Phenole, wie z.B. Kresol, Xylenol, Nitrophenol, Chlorphenol, Ethylphenol, Butylphenol und 2,5-Ditert.-butyl-4-hydroxytoluol. Geeignet sind auch Hydroxylamine, wie z.B. Diethylethanolamin und Oxime, wie Methylethylketoxim, Acetonoxim und Cyclohexanonoxim.

Als Vernetzer (Ab3) für die hydroxylgruppenhaltigen Bindemittel können ferner auch Aminoplastharze, z.B. Melaminharze, eingesetzt werden. Weiterhin können auch Kondensationsprodukte anderer Amine und Amide eingesetzt werden, z.B. Aldehydkondensate von Triazinen, Diazinen, Triazolen, Guanidinen, Guaminen oder alkylund arylsubstituierte Derivate solcher Komponenten, wie z.B. N,N'-Dimethylharnstofr, Dicyandiamide, 2-Chloro-4,6-diamino-1,3,5-triazine, 6-Methyl-2,4-diamino-1,3,5-triazine, 3,5-Diamino-triazole, Triaminopyrimidine, 2-Mercapto-4,6-diaminopyrimidine, 2,4, 6-Triethyltriamino-1,3,5-triazine u.ä.

Als Aldehyd kommen vorzugsweise Formaldehyde in Betracht. Es können aber auch Acetaldehyde, Crotonaldehyde, Acrolein, Benzaldehyde und Furfural eingesetzt werden.

Als Veretherungsalkohol enthalten die Amin-Aldehydkondensationsprodukte insbesondere Methanol, aber auch Ethanol, Propanol, Butanol, Pentanol, Hexanol, Heptanol, Benzylalkohol und aromatische oder cyclische Alkohole, Monoether oder Glykole sowie substituierte Alkohole.

Als Vernetzungsmittel (Ab3) können außerdem auch unter Estergruppenbildung mit den Hydroxylgruppen des Bindemittels reagierende Vernetzer auf Triazin-Basis eingesetzt werden. Bei diesen Vernetzern auf Triazin-Basis handelt es sich um Umesterungsvernetzer, wie bevorzugt Tris(alkoxycarbonylamino)triazin o.ä., wie beispielsweise auch in der EP-A-604 922 beschrieben.

Das hydroxylgruppenhaltige Bindemittel und der Vernetzer werden üblicherweise in einer solchen Menge eingesetzt, daß pro Äquivalent Hydroxylgruppen 0,5 bis 1,5, vorzugsweise 0,75 bis 1,25 Äquivalente gegenüber Hydroxylgruppen reaktive Gruppen (wie z.B. Isocyanatgruppen) vorliegen.

Wenn die Bindemittel zur Herstellung der erfindungsgemäßen Pulverlack-Dispersion als wäßrige Dispersion eingesetzt werden, werden zur Herstellung der Harze carboxylgruppengruppenhaltige Monomere, wie z.B. Acrylund Methacrylsäure, eingesetzt. Zur Herstellung der Wasserdispergierbarkeit werden dann in dem Fachmann bekannter Weise die Carboxylgruppen zumindest teilweise mit einem Amin oder Ammoniak neutralisiert.

Ferner können die erfindungsgemäßen Pulverlack-Dispersionen in der Komponente A oder B noch ein oder mehrere, von dem Bindemittel (Aa) verschiedene Bindemittel (Ac) bzw. (Bc), bevorzugt in einer Menge von 0 bis 100 Gew.-%, bezogen auf das Gesamtgewicht der Bindemittel-Mischung, enthalten.

Bevorzugt wird das weitere Bindemittel in der Komponente (B), besonders bevorzugt in Form einer wäßrigen Dispersion, eingesetzt. Bevorzugt weist dabei die wäßrige Dispersion des weiteren Bindemittels (Bc) einen Brechungsindex auf, der in etwa dem Brechungsindex der Pulverlack-Dispersion entspricht. Besonders bevorzugt unterscheiden sich beide Brechungsindices um maximal 0,2 Einheiten. Dadurch ist eine hohe Transparenz der ausgehärteten Filme bei der Verwendung der Pulverlack-Dispersion als Klarlack gewährleistet.

Weiterhin ist es bevorzugt, daß das weitere Bindemittel (Ac) bzw. (Bc) eine Glasübergangstemperatur von -30 bis + 20 °C aufweist.

Die festen Pulverlacke enthalten ggf. einen oder mehrere geeignete Katalysatoren für die Aushärtung des Bindemittels und des Vernetzers.

Geeignete Katalysatoren für die Epoxidharz-Aushärtung sind Phosphoniumsalze organischer oder anorganischer Säuren, quarternäre Ammoniumverbindungen, Amine, Imidazol und Imidazolderivate. Die Katalysatoren werden im allgemeinen in Anteilen von 0,001 Gew.-% bis etwa 2 Gew.-%, bezogen auf das Gesamtgewicht des Epoxidharzes und des Vernetzungsmittels, eingesetzt.

Beispiele für geeignete Phosphonium-Katalysatoren sind Ethyltriphenylphosphoniumiodid, Ethyltriphenylphosphoniumchlorid, Ethyltriphenylphosphoniumthiocyanat, Ethyltriphenylphosphonium-Acetat-Essigsäurekomplex, Tetrabutylphosphoniumiodid, Tetrabutylphosphoniumbromid und Tetrabutylphosphonium-Acetat-Essigsäurekomplex. Diese sowie weitere geeignete Phosphonium Katalysatoren sind z.B. beschrieben in US-PS 3,477,990 und US-PS 3,341,580.

Geeignete Imidazol-Katalysatoren sind beispielsweise 2-Styrylimidazol, 1-Benzyl-2-methylimidazol, 2-Methylimidazol und 2-Butylimidazol. Diese sowie weitere Imidazol-Katalysatoren sind z.B. beschrieben in dem belgischen Patent Nr. 756,693.

Außerdem kann die Pulverlack-Dispersion ggf. noch geeignete Katalysatoren für die Urethan-Aushärtung enthalten. Diese Katalysatoren werden üblicherweise in einer Menge von 0,001 bis 3 Gew.-%, bezogen auf das Gesamtgewicht des Pulverlackes, eingesetzt. Als Beispiele für geeignete Katalysatoren seien vor allem organische Metallkatalysatoren genannt, wie z.B. organische Zinn(II), Zinn(IV)-, Eisen-, Blei-, Kobalt-, Wismuth-, Antimon-, Zink- und Magnesiumverbindungen. Geeignet sind ferner Aminkatalysatoren, wie z.B. Diazabicyclooctan und Diazabicycloundecan.

Außerdem können die festen Pulverlacke ggf. noch Hilfsmittel und Additive enthalten, bevorzugt in einer Menge von 0 bis 5 Gew.-%, jeweils bezogen auf das Gesamtgewicht der Pulverlack-Dispersion. Diese Hilfsmittel werden bevorzugt in die Komponente A eingearbeitet. Beispiele hierfür sind Verlaufsmittel, Antioxidantien, UV-Absorber, Radikalfänger, Rieselhilfen und Entgasungsmittel, wie beispielsweise Benzoin.

Geeignet sind Verlaufsmittel auf der Basis von Polyacrylaten, Polysiloxanen bzw. Fluorverbindungen.

Einsetzbare Antioxidantien sind Reduktionsmittel wie Hydrazide und Phosphorverbindungen sowie Radikalfänger z.B. 2,6 Di-tert-Buthylphenolderivate.

Verwendbare UV-Absorber sind bevorzugt Triazine und Benztriphenol.

Als Radikalfänger sind bevorzugt 2,2,6,6 Tetramethylpiperidinderviate einsetzbar.

Die Komponente B der bevorzugten erfindungsgemäßen Pulverlack-Dispersion enthält wenigstens einen nicht-ionischen Verdicker. Beispiele hierfür sind z.B. modifizierte Cellulosen oder Polyurethanverdicker.

Weiterhin kann die Komponente B Katalysatoren, Verlaufsmittel, Antioxidantien, UV-Absorber, Radikalfänger und Netzmittel enthalten. Im wesentlichen kommen hier die bereits für die Komponente A aufgezählten Stoffe in Betracht.

Ferner können der Komponente B weitere Hilfsstoffe, wie z.B. Entschäumungsmittel und insbesondere Dispersionshilfsmittel, vorzugsweise carboxyfunktionelle Dispergiermittel, sowie Biozide, Lösungs- und Neutralisationsmittel und/oder Wasserrückhaltemittel zugesetzt sein.

Als Entschäumungsmittel kommen bevorzugt modifzierte Polysiloxane in Betracht.

Dispersionshilfsmittel sind z.B. bevorzugt Ammonium bzw. Metallsalze von Polycarboxylaten.

Verwendbare Neutralisationsmittel sind Amine, Ammoniak und Metallhydroxide.

Der Dispersion können vor oder nach der Naßvermahlung bzw. dem Eintragen des trockenen Pulverlackes in das Wasser 0 bis 5 Gew. % eines Entschäumergemisches, eines Ammonium- und/oder Alkalisalzes, eines carboxylfunktionellen oder nichtionischen Dispergierhilfsmittels, Netzmittels und/oder Verdickergemisches sowie der anderen Additive zugesetzt werden. Vorzugsweise werden erfindungsgemäß Entschäumer, Dispergierhilfs-, Netz- und/oder Verdickungsmittel zunächst in Wasser dispergiert. Dann werden kleine Portionen des Pulverlackes bzw. der Komponente (A) eingerührt. Anschließend werden noch einmal Entschäumer, Dispergierhilfs-, Verdickungsund Netzmittel eindispergiert. Abschließend werden nochmals in kleinen Portionen Pulverlack bzw. Komponente (A) eingerührt.

Die Einstellung des pH-Wertes erfolgt erfindungsgemäß vorzugsweise mit Ammoniak oder Aminen. Der pH-Wert kann hierbei zunächst ansteigen, daß eine stark basische Dispersion entsteht. Der pH-Wert fällt jedoch innerhalb mehrerer Stunden oder Tage wieder auf die oben angeführten Werte.

Die erfindungsgemäßen Pulverlack-Dispersionen lassen sich mit den aus der Flüssiglacktechnologie bekannten Methoden aufbringen. Insbesondere können sie mittels Spritzverfahren aufgebracht werden. Ebenso kommen elektrostatisch unterstützte Hochrotation oder pneumatische Applikation in Betracht.

Die erfindungsgemäßen Pulverlack-Dispersionen eignen sich ferner nach entsprechender Pigmentierung zur Herstellung von Pigmentpasten. Als Pigmente kann die Pulverlack-Dispersion üblicherweise eingesetzte organische und anorganische, farbgebende Pigmente enthalten, beispielsweise Titandioxid, Eisenoxide, Ruß und ähnliche anorganische Pigmente sowie farbgebende organische Pigmente, wie z.B. Indanthrenblau, Cromophthalrot, Irgazinorange, Sicotransgelb, Heliogengrün u.ä. Ferner können die Pulverlack-Dispersionen auch auf dem Lackgebiet übliche Füllstoffe, wie z.B. Kieselsäure, Magnesiumsilikate, Bariumsulfat und Titandioxid enthalten. Die Pigmente und/oder Füllstoffe werden in üblichen Mengen, bevorzugt 0 bis 10 Gew.-%, bezogen auf das Gesamtgewicht der Pulverlack-Dispersion, eingesetzt.

Die verschiedenen erfindungsgemäßen Pigmentpasten auf Basis der Pulverlack-Dispersionen (Powder-Slurry-Pasten) haben eine den konventionellen Pigmentpasten (d.h. Pigmentpasten auf Basis konventioneller, organischer Lösemittel) vergleichbare Feinheiten. Diese erfindungsgemäßen Pigmentpasten auf Basis der Pulverlack-Dispersionen lassen sich untereinander mischen und ermöglichen so die Herstellung von Unidecklacken.

Ferner lassen sich die erfindungsgemäßen Pulverlack-Dispersionen durch Vermischen mit Metall- bzw. Effektpigmenten, wie z.B. handelsübliche Aluminiumbronzen, die gemäß DE-A-36 36 183 chromatierten Aluminiumbronzen, handelsübliche Edelstahlbronzen sowie andere übliche Metallplättchen- und Metallflockenpigmente sowie Effektpigmenten, wie z.B. Mica, Perlglanz- und Interferenzpigmenten und durch entsprechende Additivierung, z.B. mit Rheologiemitteln, auch zu Metallic-Basislacken verarbeiten.

Die erfindungsgemäßen Pulverlack-Dispersionen lassen sich ferner auch in Form eines Klarlacks als Überzug von Basislacken, vorzugsweise in der Automobilindustrie, verwenden. Besonders geeignet ist eine solche Klarlack-Dispersion für Wasserbasislacke auf Basis eines Polyesters, Polyurethanharzes und eines Aminoplastharzes.

Die auf die Basislackschicht aufgebrachten Pulverklarlack-Dispersionen werden regelmäßig vor dem Einbrennen abgelüftet. Dies geschieht zweckmäßigerweise zunächst bei Raumtemperatur und anschließend bei leicht erhöhter Temperatur. In der Regel beträgt die erhöhte Temperatur 40 bis 70°C, vorzugsweise 50 bis 65°C. Das Ablüften wird für 2 bis 10 Minuten, vorzugsweise 4 bis 8 Minuten bei Raumtemperatur durchgeführt. Bei erhöhter Temperatur wird nochmals während derselben Zeitspanne abgelüftet.

Das Einbrennen kann bereits bei Temperaturen von 130°C durchgeführt werden. Durchführbar ist das Einbrennen bei 130 bis 180°C, vorzugsweise 135 bis 155°C. Mit dem erfindungsgemäßen Verfahren können Schichtdicken von 30 bis 50, vorzugsweise 35 bis 45 µm erreicht werden. Klarlacke mit vergleichbarer Qualität konnten bisher nach dem Stand der Technik unter Einsatz von Pulverklarlacken nur durch Auftrag von Schichtdicken von 65 bis 80 µm erreicht werden.

Die Erfindung wird nun anhand eines Ausführungsbeispiels näher erläutert. Alle Angaben über Teile und Prozente sind dabei Gewichtsangaben, falls nicht ausdrücklich etwas anderes festgestellt wird.

### Beispiel

1 t einer wäßrige Pulverlacksuspension wird in 3 h unter Verwendung eines Rotationszerstäubers mit einem Durchmesser von 3 m und einer Länge von 5 m unter Verwendung von Trocknungsluft mit einer Temperatur von 150 °C und einer Sprühkorntemperatur (Produkttemperatur) von 50 °C und einer Trocknungsluftmenge von 5.000 bis 5.500 Normkubikmetern zu 350 kg Pulver sprühgetrocknet. Das so erhaltene Pulver weist eine Teilchengrößenverteilung von 5 bis 25 µm auf. Das erhaltene Pulver besteht aus 75 % eines hydroxylgruppenhaltigen Acrylates, 12 % eines polymeren Isocyanates auf Basis Isophorondiisocyanat, geblockt mit Malonester/Butanonoxim, 2 % eines polymeren Isocyanates auf Basis Hexamethylendiisocyanat, geblockt mit Malonester/Butanonoxim, 10 % des unter Umesterung reagierenden Vernetzers auf Triazin-Basis (TACT der Firma Cytec) und 1 % eines handelsüblichen Lichtschutzmittels auf Basis eines sterisch gehinderten Amins. 100 Teile des sprühgetrockneten Pulvers werden mit 20 Teilen einer wäßrigen Dispersion eines Urethanacrylates (Glasübergangstemperatur - 25 °C) und mit einem handelsüblichen Verlaufsmittel versetzt und anschließend in einem Gemisch aus 400 Teilen vollentsalztem Wasser, 0,6 Teilen eines handelsüblichen Entschäumers und 0,06 Teilen eines handelsüblichen Benetzungsmittels zu einer Pulverlack-Dispersion dispergiert. Die Dispersion wird über einen 50 µm Nylonbeutel filtriert und mit 0,05 % eines handelsüblichen Verlaufsmittels versetzt. Die Applikation der Pulverlack-Dispersion erfolgt über eine Behr Ecobell-Anlage bei 45000 U/min, einer Ausflußrate von 120 ml/min und einer Spannung von 60 kV auf ein mit einer Elektrotauchlacklerung, einem Füller und einem Uni-Basislack beschichtetes Blech in einer Schichtdicke von 45 µm. Nach Vortrocknung 5 min bei 50°C und Einbrennen von 30 min bei 145 °C erhält man einen hochglänzenden, gut verlaufenden Klarlackfilm.

## Patentansprüche

1. Wäßrige Pulverlack-Dispersion, **dadurch gekennzeichnet, daß** sie herstellbar ist, indem der Vernetzer des Pulverlacks oder das Bindemittel des Pulverlacks und der Vernetzer des Pulverlacks oder der gesamte Pulverlack durch Sprühtrocknung zu einem Pulver verarbeitet wird und anschließend eine wäßrige Pulverlack-Dispersion unter Verwendung des sprühgetrockneten Pulvers hergestellt wird.

2. Wäßrige Pulverlack-Dispersion nach Anspruch 1, **dadurch gekennzeichnet, daß** die Pulverlack-Dispersion aus einer festen, pulverförmigen Komponente A und einer wäßrigen Komponente B besteht, wobei
Komponente A ein Pulverlack ist, enthaltend
Aa) wenigstens ein Bindemittel,
Ab) wenigstens ein Vernetzungsmittel,
Ac) ggf. ein oder mehrere weitere, von (Aa) verschiedene Bindemittel und
Ad) ggf. ein oder mehrere Pigmente und/oder Füllstoffe
Ae) ggf. Katalysatoren, Hilfsstoffe und pulver lacktypische Additive und
Komponente B eine wäßrige Dispersion ist, enthaltend
Ba) wenigstens einen nicht-ionischen Verdicker und
Bb) ggf. Katalysatoren und Hilfsstoffe und
Bc) ggf. ein oder mehrere weitere, von (Aa) verschiedene Bindemittel.

3. Wäßrige Pulverlack-Dispersion nach Anspruch 1 oder 2, **dadurch gekennzeichnet, daß** die Sprühtrocknung bei einer Produkttemperatur unterhalb der Glasübergangstemperatur des Bindemittels des Pulverlacks erfolgt.

4. Wäßrige Pulverlack-Dispersion nach einem der Ansprüche 1 bis 3, **dadurch gekennzeichnet, daß** sie herstellbar ist, indem zunächst eine wäßrige Dispersion des Bindemittels (Aa) hergestellt wird, die dann mit der Vernetzerkomponente (Ab) des Pulverlacks, ggf. weiterem Bindemittel (Ac), ggf. Pigmenten und/oder Füllstoffen (Ad) und ggf. Katalysatoren, Hilfsstoffen und Additiven (Ae) versetzt wird und anschließend der Pulverlack mittels Sprühtrocknung hergestellt wird.

5. Wäßrige Pulverlack-Dispersion nach einem der Ansprüche 1 bis 3, **dadurch gekennzeichnet, daß** eine Lösung des Vernetzers in einem oder mehreren organischen Lösemitteln oder eine Schmelze des Vernetzers mittels Sprühtrocknung zu einem Pulver verarbeitet wird und anschließend eine wäßrige Pulverlack-Dispersion unter Verwendung des sprühgetrockneten Pulvers hergestellt wird.

6. Wäßrige Pulverlack-Dispersion nach einem der Ansprüche 1 bis 5, **dadurch gekennzeichnet, daß** das weitere Bindemittel in Form einer wäßrigen Dispersion eingesetzt wird.

7. Wäßrige Pulverlack-Dispersion nach einem der Ansprüche 1 bis 6, **dadurch gekennzeichnet, daß** das weitere Bindemittel (Ac) und/oder (Bc) eine Glasübergangstemperatur von -30 bis +20 °C aufweist.

8. Verfahren zur Herstellung der wäßrigen Pulverlack-Dispersionen nach einem der Ansprüche 1 bis 7, **dadurch gekennzeichnet, daß** der Vemetzer des Pulverlacks oder das Bindemittel des Pulverlacks und der Vernetzer des Pulverlacks oder der gesamte Pulverlack durch Sprühtrocknung zu einem Pulver verarbeitet wird, ggf. die übrigen Bestandteile des Pulverlacks zugemischt werden und dann der Pulverlack in Wasser dispergiert wird, das ggf. weitere Hilfs- und Zusatzstoffe enthält.

9. Verfahren nach Anspruch 8, **dadurch gekennzeichnet, daß** die Pulverlack-Dispersion durch Naßvermahlung der Komponente A mit der Komponente B hergestellt wird.

10. Verfahren nach Anspruch 8, **dadurch gekennzeichnet, daß** die Komponente (A) eine mittlere Teilchengröße von weniger als 15 µm, bevorzugt eine mittlere Teilchengröße von 5 bis 10 µm, aufweist und die Pulverlack-Dispersion durch Mischen der Komponenten A und B hergestellt wird.

11. Verwendung der wäßrigen Pulverlack-Dispersionen nach einem der Ansprüche 1 bis 7 zur Beschichtung von lackierten und nicht lackierten Automobilkarosserien aus Metallblech und/oder Kunststoff.

12. Verwendung der wäßrigen Pulverlack-Dispersionen nach einem der Ansprüche 1 bis 7 zur Herstellung einer Mehrschichtlackierung, bei dem zunächst ein Basislack aufgebracht wird, aus dem Lack ein Polymerfilm gebildet wird, auf der so erhaltenen Basisschicht ein Decklack aufgebracht und anschließend die Basisschicht zusammen mit der Deckschicht getrocknet wird, **dadurch gekennzeichnet, daß** als Decklack eine Pulverlack-Dispersion nach einem der Ansprüche 1 bis 7 eingesetzt wird.

## Claims

1. An aqueous powder coating dispersion which can be prepared by processing the crosslinker of the powder coating material or the binder of the powder coating material and the crosslinker of the powder coating material or the entire powder coating material by spray drying to give a powder and then preparing an aqueous powder coating dispersion using the spray-dried powder.

2. An aqueous powder coating dispersion as claimed in claim 1, wherein the powder coating dispersion consists of a solid, pulverulent component A and of an aqueous component B,
component A being a powder coating material comprising
Aa) at least one binder,
Ab) at least one crosslinking agent,
Ac) if desired, one or more further binders other than (Aa) and
Ad) if desired, one or more pigments and/or fillers,
Ae) if desired, catalysts, auxiliaries and typical powder coatings additives
and
component B being an aqueous dispersion comprising
Ba) at least one nonionic thickener and
Bb) if desired, catalysts and auxiliaries, and
Bc) if desired, one or more further binders other than (Aa).

3. An aqueous powder coating dispersion as claimed in claim 1 or 2, wherein spray drying takes place at a product temperature below the glass transition temperature of the binder of the powder coating material.

4. An aqueous powder coating dispersion as claimed in any of claims 1 to 3, which can be prepared by first preparing an aqueous dispersion of the binder (Aa) to which are then added the crosslinker component (Ab) of the powder coating material, optionally further binder (Ac), optionally pigments and/or fillers (Ad), and optionally catalysts, auxiliaries and additives (Ae), and then the powder coating material is prepared by means of spray drying.

5. An aqueous powder coating dispersion as claimed in any of claims 1 to 3, wherein a solution of the crosslinker in one or more organic solvents, or a melt of the crosslinker, is processed to a powder by means of spray drying and then an aqueous powder coating dispersion is prepared using the spray-dried powder.

6. An aqueous powder coating dispersion as claimed in any of claims 1 to 5, wherein the further binder is used in the form of an aqueous dispersion.

7. An aqueous powder coating dispersion as claimed in any of claims 1 to 6, wherein the further binder (Ac) and/or (Bc) has a glass transition temperature of -30 to +20°C.

8. A process for preparing an aqueous powder coating dispersion as claimed in any of claims 1 to 7, which comprises processing the crosslinker of the powder coating material or the binder of the powder coating material and the crosslinker of the powder coating material or the entire powder coating material to give a powder by spray drying, if desired, admixing the other constituents of the powder coating material, and then dispersing the powder coating material in water which may comprise further auxiliaries and additives.

9. The process as claimed in claim 8, wherein the powder coating dispersion is prepared by wetgrinding component A with component B.

10. The process as claimed in claim 8, wherein component (A) has an average particle size of less than 15 µm, preferably an average particle size of from 5 to 10 µm, and the powder coating dispersion is prepared by mixing components A and B.

11. The use of an aqueous powder coating dispersion as claimed in any of claims 1 to 7 for coating painted and unpainted automobile bodies made of sheet metal and/or plastic.

12. The use of an aqueous powder coating dipsersion as claimed in any of claims 1 to 7 for producing a multicoat paint system, in which first of all a basecoat is applied, a polymer film is formed from the basecoat, a topcoat is applied to the resulting basecoat film and then the basecoat film is dried together with the topcoat film, wherein said topcoat is a powder coating dispersion as claimed in any of claims 1 to 7.

## Revendications

1. Dispersion aqueuse de peinture en poudre, **caractérisée en ce qu'**on peut l'obtenir en transformant en une poudre l'agent de réticulation de la peinture en poudre ou le liant de la peinture en poudre et l'agent de réticulation de la peinture en poudre ou la peinture en poudre dans son ensemble, par séchage par atomisation, et en préparant ensuite une dispersion aqueuse de peinture en poudre en utilisant la poudre séchée par atomisation.

2. Dispersion aqueuse de peinture en poudre selon la revendication 1, **caractérisée en ce qu'**elle consiste en un composant solide pulvérulent A et en un composant aqueux B,
le composant A étant une peinture en poudre contenant
Aa) au moins un liant,
Ab) au moins un agent de réticulation,
Ac) éventuellement un ou plusieurs autres liants différents de (Aa) et
Ad) éventuellement un ou plusieurs pigments et/ou une ou plusieurs charges,
Ae) éventuellement des catalyseurs, des adjuvants et des additifs caractéristiques de peintures en poudre
et
le composant B étant une dispersion aqueuse contenant
Ba) au moins un épaississant non ionique et
Bb) éventuellement des catalyseurs et des adjuvants et
Bc) éventuellement un ou plusieurs autres liants différents de (Aa).

3. Dispersion aqueuse de peinture en poudre selon la revendication 1 ou 2, **caractérisée en ce que** le séchage par atomisation s'effectue à une température du produit inférieure à la température de transition vitreuse du liant de la peinture en poudre.

4. Dispersion aqueuse de peinture en poudre selon l'une quelconque des revendications 1 à 3, **caractérisée en ce qu'**elle peut être obtenue en préparant d'abord une dispersion aqueuse du liant (Aa), qui est ensuite additionnée du composant de réticulation (Ab) de la peinture en poudre, éventuellement d'un autre liant (Ac), éventuellement de pigments et/ou de charges (Ad) et éventuellement de catalyseurs, adjuvants et additifs (Ae) et en préparant ensuite la peinture en poudre par séchage par atomisation.

5. Dispersion aqueuse de peinture en poudre selon l'une quelconque des revendications 1 à 3, **caractérisée en ce qu'**une solution de l'agent de réticulation dans un ou plusieurs solvants organiques ou une masse fondue de l'agent de réticulation est transformée en une poudre par séchage par atomisation et on prépare ensuite une dispersion aqueuse de peinture en poudre en utilisant la poudre séchée par atomisation.

6. Dispersion aqueuse de peinture en poudre selon l'une quelconque des revendications 1 à 5, **caractérisée en ce que** l'autre liant est utilisé sous forme d'une dispersion aqueuse.

7. Dispersion aqueuse de peinture en poudre selon l'une quelconque des revendications 1 à 6, **caractérisée en ce que** l'autre liant (Ac) et/ou (Bc) présente une température de transition vitreuse de -30 à +20°C.

8. Procédé pour la préparation des dispersions aqueuses de peinture en poudre selon l'une quelconque des revendications 1 à 7, **caractérisé en ce qu'**on transforme en une poudre, par séchage par atomisation, l'agent de réticulation de la peinture en poudre ou le liant de la peinture en poudre et l'agent de réticulation de la peinture en poudre ou la peinture en poudre dans son ensemble, éventuellement on y incorpore les autres composants de la peinture en poudre, et on disperse ensuite la peinture en poudre dans de l'eau qui contient éventuellement d'autres adjuvants et additifs.

9. Procédé selon la revendication 8, **caractérisé en ce que** la dispersion de peinture en poudre est préparée par broyage par voie humide du composant A avec le composant B.

10. Procédé selon la revendication 8, **caractérisé en ce que** le composant (A) a une taille moyenne de particule de moins de 15 µm, de préférence, une taille moyenne de particule de 5 à 10 µm, et la dispersion de peinture en poudre est préparée par mélange des composants A et B.

11. Utilisation des dispersions aqueuses de peinture en poudre selon l'une quelconque des revendications 1 à 7, pour le revêtement de carrosseries d'automobiles à base de tôle métallique et/ou de matière plastique, peintes ou non peintes.

12. Utilisation des dispersions aqueuses de peinture en poudre selon l'une quelconque des revendications 1 à 7, pour la production d'un revêtement de peinture multicouche, dans laquelle on applique d'abord une peinture de base, on forme à partir de la peinture un feuil de polymère, on applique une peinture de finition sur la couche de base ainsi obtenue et on sèche ensuite la couche de base conjointement avec la couche de finition, **caractérisée en ce qu'**on utilise comme peinture de finition une dispersion de peinture en poudre selon l'une quelconque des revendications 1 à 7.
